# EUROPEAN PATENT SPECIFICATION

(11) **EP 2 767 576 B1**
(45) Date of publication and mention of the grant of the patent: **20.09.2017**
(21) Application number: 12864634.6
(22) Date of filing: 08.11.2012
(51) Int. Cl.: C10J 3/02, C10J 3/26, C10J 3/72, C10K 1/02, C10K 1/10, F02B 43/08

(54) **GASIFICATION APPARATUS**
GASIFIZIERUNGSVORRICHTUNG
APPAREIL DE GAZÉIFICATION

(30) Priority: 05.01.2012 JP 2012000737
(43) Date of publication of application: 20.08.2014
(73) Proprietor: Yanmar Co., Ltd., Osaka 530-8311 (JP)
(72) Inventor: WAKIZAKA, Hiroaki, Osaka-shi, Osaka 530-8311 (JP); AKASAKA, Futoshi, Osaka-shi, Osaka 530-8311 (JP)
(74) Representative: Hinkelmann, Klaus
(86) International application number: PCT/JP2012/078961
(87) International publication number: WO 2013/103049

(56) References cited:
- EP-A2- 0 117 765
- JP-A- 2005 247 992
- JP-A- 2005 325 322
- JP-A- 2010 215 810
- US-A- 4 568 361
- US-A1- 2004 107 638

## Description

### Technical Field

The present invention relates to a gasification system, specifically to a tar avoidance control apparatus in the gasification system.

### Background Art

Conventionally, as a gasification system that gasifies biomass fuel (hereinafter referred to as the "fuel"), a configuration including the following is known: a gasification furnace gasifying the fuel; a supply conveyor supplying the fuel to the gasification furnace; an inner cylinder introducing the fuel into the gasification furnace; a scrubber, a filter, an induced draft blower, an engine generating apparatus and the like (for example, see Patent Document 1).

Also, a fuel change over device for a gas engine is known, which stably changes over between high calorie gas and low calorie gas (for example, see Patent Document 2). Furthermore, a fuel change over system for a gas engine is known, which stably changes over between a low calorie gas and a liquid fuel instead of the high calorie gas (for example, see Patent Document 3).

### Prior Art Documents

### Patent Documents

- [Patent Document 1]: JP 2010-215810 A
- [Patent Document 2]: JP 2009-036111 A
- [Patent Document 3]: JP 4149210

### Summary of the Invention

### Problem to be Solved by the Invention

The gasification system according to Patent Document 1 has a configuration in which a combustion part is made by accumulating fuel up to a predetermined height from a lower end opening of an inner cylinder, and gas generated inside a gasification furnace is sucked by an induced draft blower so as to be supplied to an engine via a gas path.

When the fuel is located above the lower end opening of the inner cylinder, the lower end opening is plugged with the fuel. Thus, the inside of the gasification furnace is in a state of a constant negative pressure and the gas that is generated is sucked, thereby an inside furnace atmosphere is maintained to be in the negative pressure and a normal operation is carried out.

However, in the gasification furnace, the inside of the fuel is gasified and a cavity is generated, thus a bridge state may occur. When the bridge state occurs, the fuel on the cavity falls down to burst into a collapse.

In such a collapse of the bridge, a large amount of fuel (insufficiently heated raw material) is supplied to a high temperature portion of the lower potion of the gasification furnace. For this reason, the temperature balance is lost and a temperature in the gasification furnace is decreased drastically, thus tar is produced.

In such a gasification system, though a scrubber, a filter and the like are equipped in the downstream of the gasification furnace, none of them ensures a sufficient removing ability. The gas containing a large amount of tar is condensed in respective apparatuses in the downstream of the gasification furnace, thus malfunction by conglutination and the like occurs. In the engine especially, a supercharger, an intake valve and the like are conglutinated with the tar, which causes the malfunction.

It is popular that when starting (at a low temperature), the engine is not operated, but operated after the temperature becomes high. However, a method for detecting and avoiding production of the tar during operation is not known.

The systems according to Patent Documents 2 and 3 are to stably change over between low calorie gas and high calorie gas/ liquid fuel. They do not have a configuration in which a supply of gas to an engine is stopped according to production of tar.

EP 0 117 765 A2 discloses a gasifier for generating a producer gas output from a cellulosic waste material input that has an axially aligned top fuel feed down onto a conical grate with a provision for removing fuel pile ash from around the base perimeter of the grate. A preferred embodiment includes means for adjusting the fuel feed above the level of the grate and to control underfire admission air through plenums 50A to 50E from beneath the grate so as to control the fuel pile size. An annular top opening is provided for guiding producer gas from the chamber. A producer gas burner has a cyclonic combustion chamber with an upper inlet for spirally directing producer gas down into the chamber and secondary combustion air inlet means at the lower end of the chamber for directing secondary air tangentially and upwardly into the chamber. An exhaust outlet is disposed at the lower end of the chamber with an exhaust inlet axially aligned with the chamber. In an embodiment, the gasifier and burner are combined using a double scrolled duct to transport producer gas from the gasifier to the burner, and the gasifier and burner share a common ash removal system. Several sensors can be provided to obtain information on the supply. EP 0 117 765 A2 is concerned with improvements in the design of the gasifier so as to better accommodate cellulosic waste material fuel, which has a wide range of moisture from the very dry to the very wet and the introduction of an ash removal system so that a continuous and balanced flow of non-gaseous material from the time raw fuel enters the feed tube until the time fuel pile ash is removed from the annular base region takes place.

The problem to be solved by the present invention is: to monitor conditions in which a large amount of tar is produced compared to a normal operation to gasify fuel; and to prevent gas containing the large amount of tar from being supplied to an engine. Means for Solving Problem

The present invention is made for solving the above problem. A gasification system of the present invention includes: a gasification furnace configured to gasify fuel; a fuel supply apparatus configured to supply fuel to the gasification furnace; and an inner cylinder configured to introduce the fuel and air into the gasification furnace, the inner cylinder being included in the gasification furnace. The gasification system is configured to supply gas generated in the gasification furnace to an engine via a gas path. The gasification system further includes: a detection unit configured to detect whether or not a lower end portion of the inner cylinder is plugged with the fuel; and a control apparatus connected with the detection unit and provided to control opening/closing of opening/closing valves in the gasification system so as to stop the supply of the gas to the engine when it determines that the lower end portion of the inner cylinder is not plugged with the fuel based on a signal from the fuel detection unit.

When the fuel does not exist in the inner cylinder, air is sucked into the gasification furnace via the inside of the inner cylinder. Thereby, an inside furnace atmosphere is changed, and production of tar is increased because of decrease of the temperature. In the present invention, the control apparatus stops the supply of the gas to the engine when determining that the lower end portion of the inner cylinder is not plugged with the fuel based on the signal from the detection unit. Thus, it is possible to prevent the gas containing a large amount of tar from being supplied to the engine, which results in resolution of failures and troubles caused by the tar in the component apparatuses such as an engine.

A gasification system of the present invention includes: a gasification furnace gasifying fuel; and a fuel supply apparatus supplying fuel to the gasification furnace. The gasification system is configured to supply gas generated in the gasification furnace to an engine via a gas path. The gasification system further includes: a detection unit monitoring an inside furnace atmosphere caused by production of tar in the gasification furnace; and a control apparatus that compares a detected signal value from the detection unit to a predetermined reference value and that stops the supply of the gas to the engine when determining that the inside furnace atmosphere requires avoidance of the tar.

In the present invention, the control apparatus stops the supply of the gas to the engine when determining that the inside furnace atmosphere requires avoidance of the tar. Thus, it is possible to prevent the gas containing a large amount of tar from being supplied to the engine, which results in resolution of failures and troubles caused by the tar in the component apparatuses such as an engine.

In the above-described gasification system, the fuel may be supplied to the engine after elapse of a predetermined time period from return.

In the above-described invention, it is possible not only to eliminate an engine trouble but also to stably and continuously generate power by changing over from a dual fuel combustion operation with high calorie gas such as town gas and gas generated in the gasification system to a mono fuel combustion operation only with high calorie gas.

### Effects of the Invention

In the present invention, it is possible to: monitor conditions in which a large amount of tar is produced compared to the normal operation; and prevent the gas containing the large amount of tar from being supplied to an engine. As a result, it is possible to prevent a supercharger, an intake valve and the like of the engine from being conglutinated to cause malfunction.

### Brief Description of Drawings

[FIG. 1] FIG. 1 is a diagram showing a gasification system according to an embodiment of the present invention.
[FIG. 2] FIG. 2 is a front cross-sectional view showing a gasification furnace included in the gasification system.
[FIG. 3] FIG. 3 is a block diagram showing control of the gasification system.
[FIG. 4] FIG. 4 is a flowchart showing control of the gasification system.
[FIG. 5] FIG. 5 is a flowchart showing control of the gasification system.
[FIG. 6] FIG. 6(a) is a graph showing a relation between a tar concentration and a CH₄ concentration. FIG. 6(b) is a graph showing a relation between a N₂ concentration fluctuation and a CH₄ concentration fluctuation.
[FIG. 7] FIG. 7 is a side cross-sectional view showing the gasification furnace according to another embodiment of the present invention.

### Modes for Carrying out the Invention

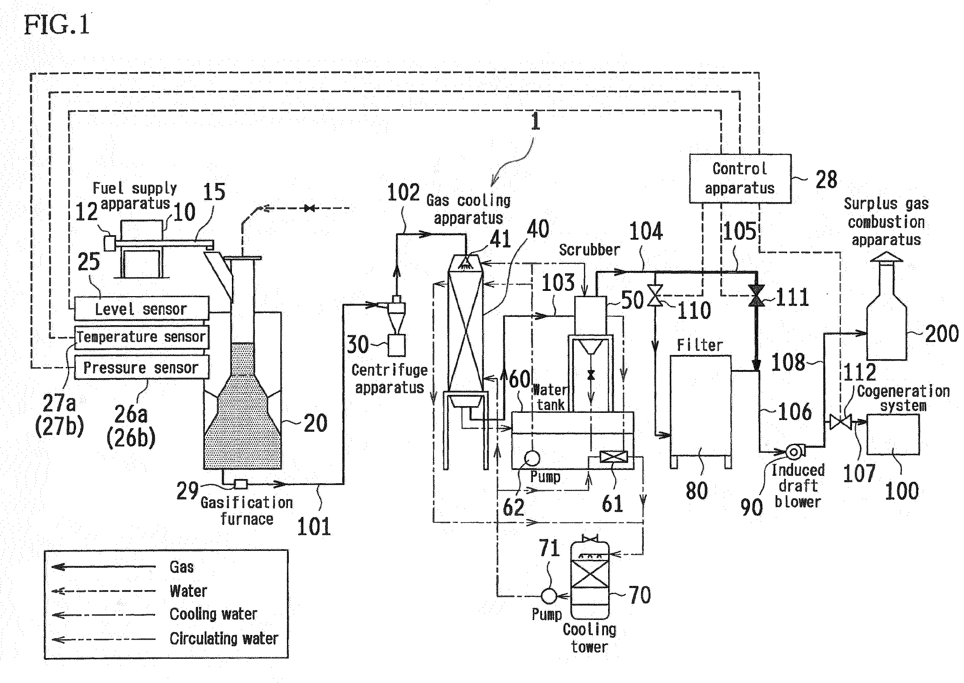

Hereinafter, a specific embodiment of the present invention will be described with reference to the drawings. FIGS. 1 to 6 show an embodiment of the present invention.

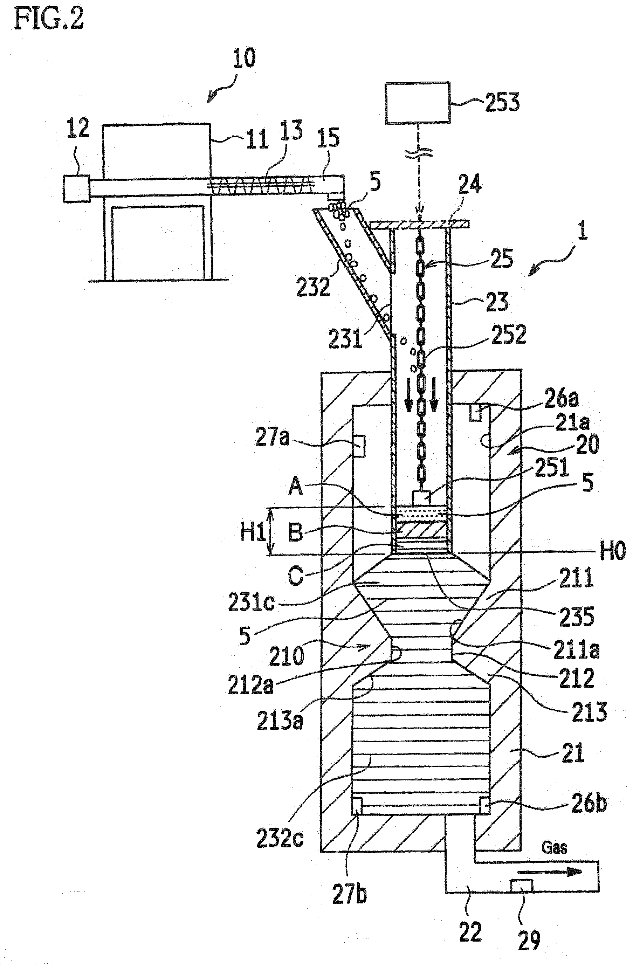

First, a gasification system 1 will be generally described. As shown in FIGS. 1 and 2, the gasification system 1 is a woody biomass power plant (system) using, for example, a woody material as fuel. The gasification system 1 includes a fuel supply apparatus 10, a gasification furnace 20, a centrifuge apparatus 30, a gas cooling apparatus (heat exchanger) 40, a scrubber 50, a water tank 60, a cooling tower 70, a filter 80, an induced draft blower 90, an engine generating apparatus 100, a surplus gas combustion apparatus 200 and the like.

As shown in FIG. 2, the fuel supply apparatus 10 supplies fuel to the gasification furnace 20. The fuel supply apparatus 10 includes a hopper 11, a motor 12 and a screw 13 to discharge fuel. A horizontal cylinder portion 15 is connected to the bottom portion of the hopper 11, and the screw 13 is rotatably provided in the cylinder portion 15.

By controlling a frequency of the motor 12 by an inverter, a rotation speed of the screw 13 is controlled, thus a feeding amount of fuel to the gasification furnace 20 is adjusted.

The gasification furnace 20 gasifies the fuel from the fuel supply apparatus 10. In the gasification furnace 20, a gasification agent (air) is supplied to accelerate the gasification of the fuel. In FIG. 1, the dashed line arrow indicates a path through which the "air" flows.

The centrifuge apparatus 30 removes large particles of dust and the like contained in the gas from the gasification furnace 20 by centrifugation. In FIG. 1, the solid line arrow indicates a path through which the "gas" flows. A gas path 101 is connected between the gasification furnace 20 and the centrifuge apparatus 30.

The heat exchanger 40 is a gas cooling apparatus to cool the gas from the centrifuge apparatus 30. The heat exchanger 40 includes a water spray nozzle 41 that cleans the gas. A gas path 102 is connected between the centrifuge apparatus 30 and the heat exchanger 40.

The scrubber 50 cleans and cools the gas from the heat exchanger 40 by water. In the water tank 60, the water to be supplied to the scrubber 50 and the heat exchanger 40 is stored. The water tank 60 includes a heat exchanger 61. A gas path 103 is connected between the heat exchanger 40 and the scrubber 50.

The water in the water tank 60 is fed to the water spray nozzle 41 and the scrubber 50 under pressure by a pump 62. The water fed from the water tank 60 returns into the water tank 60 from the heat exchanger 40 and the scrubber 50. That is, the water in the water tank 60 contains soot, tar and the like that are contained in the gas. Hereinafter, the water in the water tank 60 is referred to as "circulating water". In FIG. 1, the dashed-two dotted line arrow indicates a path through which the "circulating water" flows.

In the cooling tower 70, the water to be supplied to the heat exchanger 40 and the heat exchanger 61 is stored. The water in the cooling tower 70 is fed to the heat exchanger 40 and the heat exchanger 61 under pressure by a pump 71.

The water fed from the cooling tower 70 returns into the cooling tower 70 from the heat exchanger 40 and the heat exchanger 61. The water in the cooling tower 70 cools the circulating water in the water tank 60 indirectly (so as not to be mixed with the circulating water in the water tank 60) by heat exchanger 61. The water in the cooling tower 70 also cools the gas indirectly (so as not to be mixed with the gas) by the heat exchanger 40. That is, the water in the cooling tower 70 does not contain the soot, tar and the like contained in the gas. Hereinafter, the water in the cooling tower 70 is referred to as "cooling water". In FIG. 1, the dashed-dotted line arrow indicates a path through which the "cooling water" flows.

The filter 80 filters small particles of dust and the like contained in the gas. A gas path 104 is connected between the scrubber 50 and the filter 80.

The induced draft blower 90 induces the gas from the gasification furnace 20 to the side of the engine generating apparatus 100 by a negative pressure operation.

The filter 80 is connected to the engine generating apparatus 100 and the surplus gas combustion apparatus 200 via a gas path 106. The induced draft blower 90 is interposed in the course of the gas path 106. The gas path 106 is divided into a gas path 107 for the engine that is connected to the engine generating apparatus 100 and a surplus gas path 108 that is connected to the surplus gas combustion apparatus 200 in the downstream of the induced draft blower 90. An opening/closing valve 112 is connected to the gas path 107 for the engine.

A bypass gas path 105 is divided from the gas path 104. The bypass gas path 105 is connected to the gas path 106 in the downstream of the filter 80. An opening/closing valve 111 is connected to the bypass gas path 105.

An opening/closing valve 110 is connected in the downstream of a position where the bypass gas path 105 is divided from the gas path 104.

The engine generating apparatus 100 drives the generator by the gas engine. The surplus gas combustion apparatus 200 burns the surplus gas.

Next, the gasification furnace 20 will be described in detail. As shown in FIG. 2, the gasification furnace 20 includes: a gasification furnace main body 21 made of an outer cylinder; and an inner cylinder 23. At the lower side of the gasification furnace main body 21, a gas discharge port 22 is provided. Residue (ash and the like after gasification) in the gasification furnace 20 is discharged outside the gasification furnace 20 by a discharge conveyer (not shown). The inner cylinder 23 protrudes upward on the upper end portion of the gasification furnace main body 21.

The inner cylinder 23 is a cylinder shaped member into which fuel is introduced. The inner cylinder 23 is vertically provided so that its axis center is coincident with the axis center of the gasification furnace main body 21. The upper and lower end portions of the inner cylinder 23 are opened. The upper end opening of the inner cylinder 23 may be closed by a lid 24.

The lower portion of the inner cylinder 23 is inserted into the gasification furnace main body 21 from above so as to vertically provided in the gasification furnace main body 21. A lower end opening 235 is located in the middle of the gasification furnace main body 21. The upper portion of the inner cylinder 23 protrudes upward from the upper end portion of the gasification furnace main body 21. The gasification agent (air) is introduced from the upper end portion (one portion) of the inner cylinder 23. At one portion of the outer periphery of the upper portion of the inner cylinder 23, a feed port 231 is opened to feed the fuel from the fuel supply apparatus 10.

An end portion of a feed tube 232 is connected to the feed port 231. The other end portion of the feed tube 232 is provided so as to extend obliquely upward. From the other end portion of the feed tube 232, fuel 5 that is come from the fuel supply apparatus 10 is fed.

The gasification furnace main body 21 has a constricted portion 210 that is located under the lower end opening 235 of the inner cylinder 23. The constricted portion 210 is formed by a ring-shaped convex portion of the gasification furnace main body 21 that extends in the central direction. The constricted portion 210 is constituted by a narrowing opening 211, a throat portion 212 and an expanding opening 213. The narrowing opening 211 has an inclined surface 211a in which an opening area of an inner peripheral surface 21a of the gasification furnace main body 21 gradually decreases downward. The throat portion 212 has an opening 212a extending downward from the lower end of the narrowing opening 211. The expanding opening 213 has an inclined surface 213a in which the opening area gradually increases from the throat portion 212.

Specifically, the opening area of the upper end of the narrowing opening 211 is set to be equal to the opening area formed by the inner peripheral surface 21a of the gasification furnace main body 21. The opening area of the lower end of the narrowing opening 211 is set to be equal to the opening area of the throat portion 212, and furthermore, is set to be equal to the opening area of the inner cylinder 23. The upper opening area of the expanding opening 213 is set to be equal to the opening area of the throat portion 212. In addition, the lower opening area of the expanding opening 213 is set to be equal to the opening area formed by the inner peripheral surface 21a of the gasification furnace main body 21.

As shown in FIG. 2, in the upper portion of the inner cylinder 23, a level sensor 25 is provided for detecting a height position of the fuel 5 (accumulation height of the fuel) that has accumulated in the inner cylinder 23. The level sensor 25 includes a chain 252 and a measurement portion 253. The chain 252 hangs down in the inner axis direction (vertical direction) of the inner cylinder 23 and has a weight 251 at the lower end thereof. The measurement portion 253 has a drive portion to wind up and down the chain 252 so as to have the weight 251 go up and down. When measuring, with the level sensor 25, an upper surface position of the fuel 5 accumulated in the inner cylinder 23, the weight 251 goes down due to extension of the chain 252. When the weight 251 makes contact with the fuel 5, the measurement portion 253 detects a change in the weight of the weight 251 (change in the weight balance of the weight), thus, the height of the fuel 5 can be obtained. Such a level detection of the fuel 5 is carried out on a regular and continuous basis (for example, at one-minute intervals).

As shown in FIG. 2, in the gasification furnace main body 21, a plurality of pressure sensors 26a and 26b is provided. The pressure sensors 26a and 26b detect a pressure in the gasification furnace main body 21 (hereinafter referred to as the "inner pressure"). The pressure sensor 26a is mounted on the upper portion in the gasification furnace main body 21, preferably on the upper end portion. That is, the pressure sensor 26a is located separated apart from the fuel 5 accumulated in the gasification furnace 20. The pressure sensor 26b is provided under the throat portion 212 (in the bottom portion or its vicinity of the gasification furnace main body 21).

As shown in FIG. 2, in the gasification furnace main body 21, a plurality of temperature sensors 27a and 27b is provided. The temperature sensor 27a is mounted on the upper portion of the inner peripheral surface 21a of the gasification furnace main body 21. That is, the temperature sensor 27a is located separated apart from the fuel 5 accumulated in the gasification furnace main body 21. The temperature sensor 27b is provided under the throat portion 212 (in the bottom portion or its vicinity of the gasification furnace main body 21).

As shown in FIG. 2, a gas concentration sensor 29 for detecting a gas component concentration is provided in the gas discharge port 22.

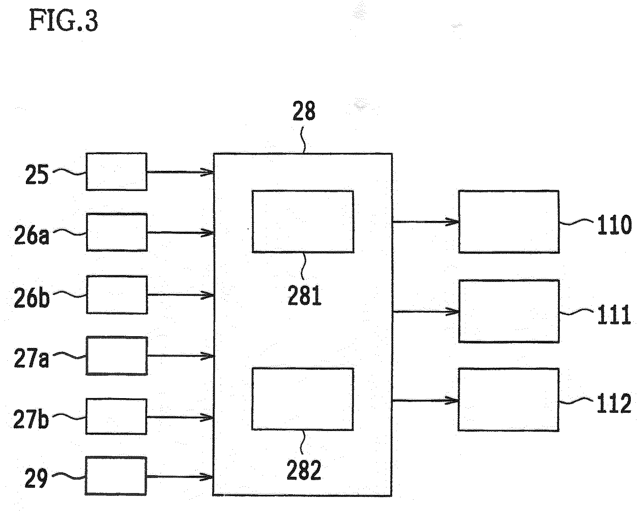

As shown in FIGS. 1 and 3, the level sensor 25, the pressure sensors 26a and 26b, the temperature sensors 27a and 27b, and the gas concentration sensor 29 are connected to the control apparatus 28. The control apparatus 28 controls opening/closing of the opening/closing valves 110, 111 and 112 based on signals (detected signal values) from the level sensor 25, the pressure sensors 26a and 26b, the temperature sensors 27a and 27b, and the gas concentration sensor 29.

The level sensor 25, the pressure sensors 26a and 26b, the temperature sensors 27a and 27b, and the gas concentration sensor 29 correspond to detection units that monitor an inside furnace atmosphere caused by production of the tar. The motor 12 of the fuel supply apparatus 10 is connected to the control apparatus 28. The control apparatus 28 includes a processing portion 281 and a memory 282.

The processing portion 281 is constituted by a CPU (Central Processing Unit) and the like. The memory 282 is constituted by a ROM (Read Only Memory), a RAM (Random Access Memory) and the like.

The above-configured gasification system 1 includes the gasification furnace 20 and the fuel supply apparatus 10, and supplies the gas generated in the gasification furnace 20 to the engine via the gas paths 101, 102, 103, 104, 106 and 107. The gasification system 1 also includes: the detection units 25, 26a, 26b, 27a, 27b and 29 that monitor the inside furnace atmosphere caused by production of the tar in the gasification furnace 20; and the control apparatus 28 that compares the detected signal values from the detection units to predetermined reference values and that stops the supply of the gas to the engine when determining that the inside furnace atmosphere requires avoidance of the tar.

Next, gasification of the fuel 5 by a normal operation will be described, using the above-configured gasification system 1.

The fuel 5 is fed into the hopper 11 of the fuel supply apparatus 10. In the fuel supply apparatus 10, the motor 12 causes the screw 13 to rotate at a predetermined rotation speed. The fuel 5 is supplied to the inner cylinder 23 of the gasification furnace 20 via the screw 13. The fuel 5 fed into the inner cylinder 23 is supplied to the gasification furnace main body 21, and is accumulated up to a predetermined height (an inside furnace level target value) H1 upward from the lower end opening 235 of the inner cylinder 23. Then, the fuel 5 begins to burn to become gas. As shown in FIG. 2, the fuel 5 accumulated in the inner cylinder 23 includes, from the upper portion, a dry layer/dry distillation layer A, an oxidation layer B and a reduction layer C.

The gas generated in the gasification furnace 20 is sucked by the gas discharge port 22 and is supplied to the centrifuge apparatus 30 via the gas path 101. The centrifuge apparatus 30 removes large particles of dust and the like contained in the gas from the gasification furnace 20 by centrifugation.

After the centrifuge apparatus 30 removed the large particles of dust and the like included in the gas, such a gas is supplied to the heat exchanger 40 via the gas path 102 so as to be cooled. The gas cooled by the heat exchanger 40 is further supplied to the scrubber 50 via the gas path 103 so as to be cleaned and cooled by water.

The gas cleaned and cooled by the scrubber 50 is supplied to the filter 80 via the gas path 104. At that time, the opening/closing valve 110 is opened, but the opening/closing valve 112 is closed. Thus, the gas does not flow through the bypass gas path 105.

The filter 80 filters small particles of dust and the like contained in the gas. The induced draft blower 90 induces the gas from the gasification furnace 20 to the side of the engine generating apparatus 100 by a negative pressure operation. The gas that has passed through the induced draft blower 90 is supplied to the engine generating apparatus 100 via the gas path 107 for the engine with the opening/closing valve 112 being opened. The engine generating apparatus 100 drives the generator by the gas engine. Surplus gas is supplied to the surplus gas combustion apparatus 200 via the surplus gas path 108. The surplus gas combustion apparatus 200 burns the surplus gas.

Next, a description will be given of tar avoidance control.

Tar is produced when the inside furnace level in the inner cylinder is not in an appropriate range or when a bridge generated in the throat portion 212 is broken. The avoidance control detects inappropriateness of the inner cylinder level in the furnace or the breakup of the bridge in the throat portion 212 so as to prevent the tar produced in such cases from affecting the apparatuses.

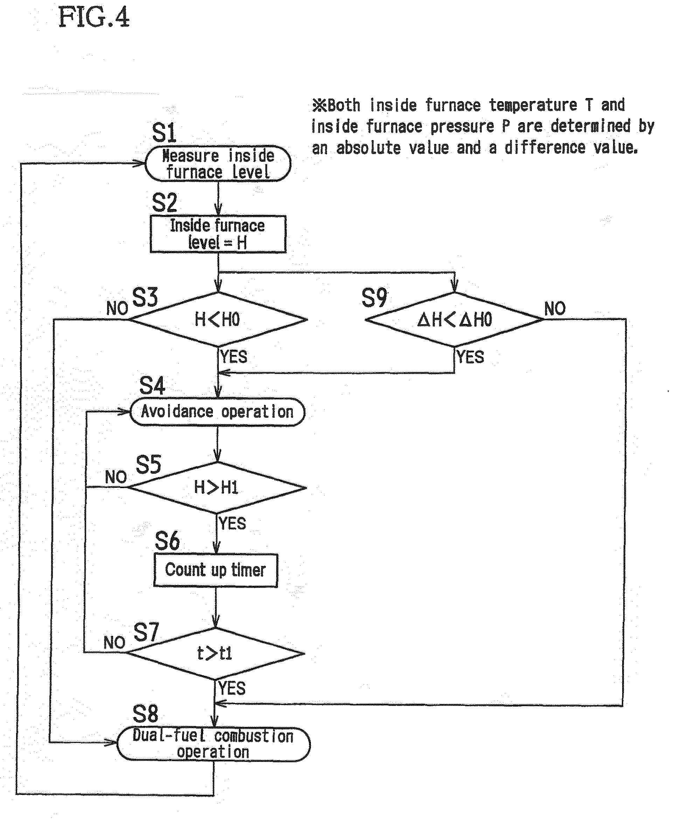

A description will be given of a case in which the level sensor 20 serves as the detection unit to monitor the atmosphere inside the gasification furnace 20 with reference to the flowchart indicated in FIG. 4.

First, a measurement of a level of the fuel 5 inside the inner cylinder 23 is carried out by the level sensor 25 (S1), so that an inside furnace level H of the fuel 5 is detected (S2).

The inside furnace level (detected signal value) H is compared to a predetermined reference level (reference value) H0. Here, the reference level H0 is a position of the lower end opening 235 of the inner cylinder 23. In this case, it is set to H0 = 0. When it is determined to be H < H0 (i.e. the inside furnace level H is less than the reference level H0), it is determined that the inside atmosphere of the gasification furnace 20 has been changed. For example, when the normal operation in which the fuel is accumulated in the inner cylinder 23 is carried out, the relationship H > H0 is satisfied. That is, as described above, the inside furnace level H corresponds to the inside furnace level target value H1.

When the relationship H < H0 is satisfied (S3), the bridge of the fuel is broken, thus it can be determined that the tar is produced accordingly. Also, it can be determined to be a short supply of the fuel to the inner cylinder 23.

Then, the control apparatus 28 starts an avoidance operation (S4). Specifically, the control apparatus 28 closes the opening/closing valve 110 and the opening/closing valve 112, and opens the opening/closing valve 111. Thereby, the gas containing a large amount of tar flows the bypass gas path 105 to be supplied to the surplus gas combustion apparatus 200. As a result, by bypassing the filter 80, damage of a filter cloth by the tar can be minimized, and its durability can also be improved. Also, it is possible to prevent malfunction of a supercharger, an intake valve and the like of the engine due to conglutination with the tar.

When the fuel is supplied from the fuel supply apparatus 10 to the gasification furnace 20 so that the relationship H > H1 is satisfied (S5), a timer is counted up (S6). Here, H1 is the inside furnace level target value for the optimal combustion. It is also possible to provide the relationship H1= H0. A predetermined time period can be set, for example, to 15 minutes after the return of the level of the fuel 5 in the inner cylinder 23.

After the predetermined time period is elapsed (S7), the control apparatus 28 carries out the normal operation (S8). That is, the control apparatus 28 closes the opening/closing valve 111, and opens the opening/closing valves 110 and 112. Thereby, the gas came from the scrubber 50 flows through the gas path 104, the filter 80, the gas path 106 and the gas path 107 for the engine to be supplied to the engine generating apparatus 100.

Furthermore, if town gas or liquid fuel is supplied to the engine in addition to the fuel gas produced by the gasification system 1, the town gas or the liquid fuel can drive the engine while the supply of the fuel gas is stopped. Also, the engine may be stopped while the supply of the fuel gas is stopped.

As described above, when the relationship H0 = 0 is satisfied, the level sensor 25 corresponds to the detection unit for detecting whether or not the lower end portion of the inner cylinder 23 is plugged with the fuel. The control apparatus 28 carries out the control to stop the gas supply to the engine when it is determined that the lower end portion of the inner cylinder 23 is not plugged with the fuel (when it is determined that the inside furnace atmosphere requires avoidance of the tar) based on the signal of the level sensor 25.

Also, the level of the fuel 5 in the inner cylinder 23 can be detected by comparing a deviation ΔH of the inside furnace level per unit time to a deviation ΔH0 of the reference level (S9). The means can be applied to both cases in which the level in the inner cylinder inside the furnace is not appropriate and in which the breakup of the bridge in the throat portion 212 occurs.

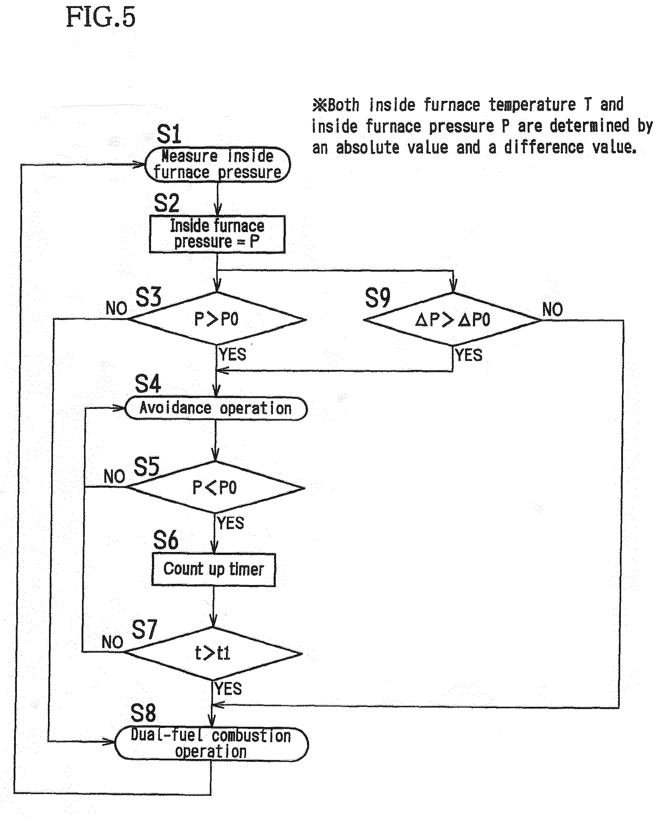

Next, a description will be given of a case in which the pressure sensors 26a and 26b serve as the detection units to monitor the atmosphere inside the gasification furnace 20 with reference to the flowchart indicated in FIG. 5. The pressure sensor 26a is used for detection of inappropriateness of the control of the level in the inner cylinder inside the furnace, and the pressure sensor 26b is used for detection of the breakup of the bridge in the throat portion 212.

First, a pressure of the fuel 5 in the inner cylinder 23 is measured using the pressure sensor 26a (S1), and an inside furnace pressure (inner pressure) P is detected (S2).

The inner pressure (detected signal value) P is compared to a predetermined reference pressure (reference value) P0. Here, the reference pressure P is a pressure under which the fuel can be normally gasified inside the furnace.

When it is determined to be P > P0, it is determined that the inside furnace atmosphere is changed. For example, when the fuel is accumulated in the inner cylinder 23, the inner cylinder 23 is plugged with the fuel, thus the air is hardly sucked from the inner cylinder 23. Consequently, the inner pressure P is a negative pressure. When the relationship P > P0 is satisfied, the air is sucked from the inner cylinder 23 into the gasification furnace main body 21, thus the inner pressure is equal to or nearly equal to the atmospheric pressure. Hence, it can be determined that the fuel in the inner cylinder 23 falls down due to the breakup of the bridge of the fuel.

Therefore, when the normal operation is carried out to accumulate the fuel in the inner cylinder, the relationship P < P0 is satisfied. However, when the relationship P > P0 is satisfied (S3), it can be determined that the tar is produced due to the breakup of the bridge of the fuel.

Then, the control apparatus 28 starts the avoidance operation (S4). When the fuel is supplied from the fuel supply apparatus 10 to the gasification furnace 20 and the relationship P < P0 is satisfied (S5), the timer is counted up (S6). After the predetermined time period is elapsed (S7), the control apparatus 28 carries out the normal operation (S8).

In the constricted portion 210, the bridge is likely to occur due to the small opening area. When the bridge is broken, the pressure is changed and the pressure sensor 26b detects such a change in the pressure. Note that the pressure sensor 26b is not described here because it works similarly to the above-described pressure sensor 26a.

Also, the inner pressure in the inner cylinder 23 can be detected by comparing a deviation ΔP of the inner pressure per unit time to a deviation ΔP0 of the reference pressure (S9).

Next, a description will be given of a case in which the temperature sensors 27a and 27b serve as the detection units to monitor the atmosphere inside the gasification furnace 20. The temperature sensor 27a is used for detection of inappropriateness of the control of the level in the inner cylinder inside the furnace, and the temperature sensor 27b is used for detection of the breakup of the bridge in the throat portion 212. Note that the description will be given with reference to FIG. 5, reading the reference numeral P in FIG. 5 as the reference numeral T.

A space temperature at the outer peripheral portion of the inner cylinder 23 is measured using the temperature sensor 27a (S1) to detect an inside furnace temperature T (S2).

The inside furnace temperature (detected signal value) T is compared to a predetermined reference temperature (reference value) T0. Here, the reference temperature T0 is a minimum temperature at which the fuel can be normally gasified inside the gasification furnace 20. Therefore, when the normal operation is carried out to accumulate the fuel in the inner cylinder 23, the relationship T < T0 is satisfied.

When the relationship T > T0 is satisfied (S3), it is determined that the inside furnace atmosphere is changed. When the level in the inner cylinder inside the furnace is not in the appropriate range and a drift is generated inside the inner cylinder, a temperature of the temperature sensor 27a in the space is increased due to the air excessively supplied. On the other hand, a temperature is decreased at the point where the air hardly passes, thus production of the tar is increased.

Then, the control apparatus 28 starts the avoidance operation (S4). When the fuel is supplied from the fuel supply apparatus 10 to the gasification furnace 20 and the relationship T < T0 is satisfied (S5), the timer is counted up (S6). After the predetermined time period is elapsed (S7), the control apparatus 28 carries out the normal operation (S8).

In the constricted portion 210, the bridge is likely to occur due to the small opening area. When the bridge is broken, the large amount of fuel is rapidly supplied to the point where the temperature is high. Thus, the amount of air that is necessry to burn is decreased and as a result, the temperature inside the furnace is decreased. At that time, the tar is contained in the large amount of volatilization. Since the temperature in the furnace is also decreased, the tar is not dissolved, and is discharged outside the furnace. In such a case, the temperature sensor 27b located under the throat portion 212 detects more correctly the change of the temperature.

In temperature sensor 27a, if the drift is generated at the time that the bridge is broken, there is no regularity in the change of the temperature. On the other hand, in the temperature sensor 27b, there appears regularity in the change of the temperature because the throat portion 212 does not affect the temperature sensor 27b. Note that the description will be given with reference to FIG. 4, reading the reference numeral H in FIG. 4 as the reference numeral T.

A temperature under the throat portion 212 is measured using the temperature sensor 27b (S1) to detect the inside furnace temperature T (S2).

The inside furnace temperature T is compared to the predetermined reference temperature (reference value TO). Here, the reference temperature T0 is a minimum temperature at which the fuel can be normally gasified inside the gasification furnace 20. Therefore, when the normal operation is carried out where no breakup of the bridge occurs, the relationship T > T0 is satisfied.

When the relationship T < T0 is satisfied (S3), it is determined that the inside furnace atmosphere is changed. For example, the temperature under the throat portion 212 is 700 °C. But when the large amount of fuel falls down to the high temperature region due to the breakup of the bridge, the air for combustion lacks so that the temperature is decreased, thus, the production of the tar is increased.

Then, the control apparatus 28 starts the avoidance operation (S4). When the fuel is supplied from the fuel supply apparatus 10 to the gasification furnace 20 and the relationship T > T0 is satisfied (S5), the timer is counted up (S6). After the predetermined time period is elapsed (S7), the control apparatus 28 carries out the normal operation (S8).

In any case, when detecting the temperature, it is possible to compare a deviation ΔT of the inside furnace temperature per unit time to a deviation ΔT0 of the reference temperature (S9).

A description will be given of a case in which the gas concentration sensor 29 serves as the detection unit to monitor the atmosphere inside the gasification furnace 20.

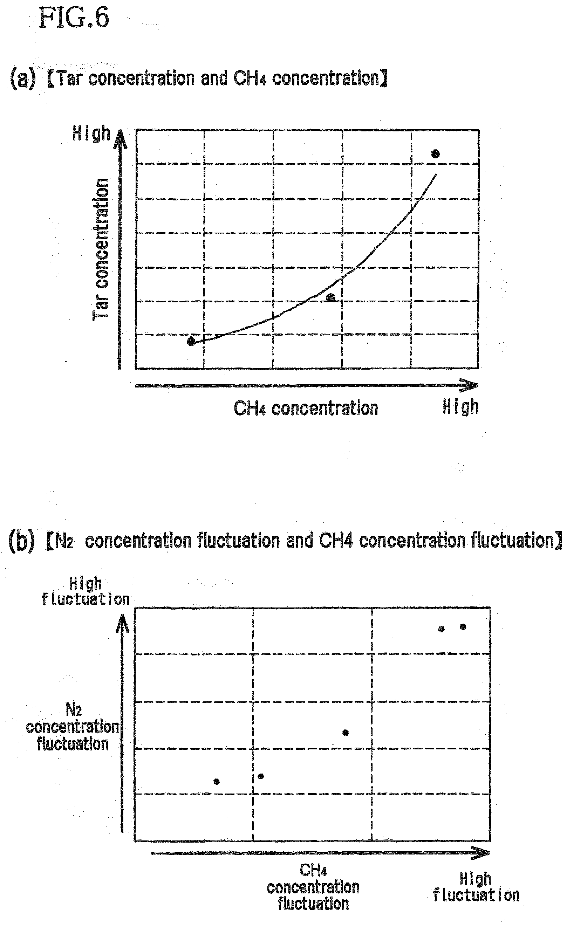

The generated gas contains methan (CH₄) and nitrogen (N₂). So, it is possible to control using CH₄ and N₂. FIG. 6 (a) indicates a relationship between a tar concentration and a CH₄ concentration. Since the tar concentration is correlated with the CH₄ concentration, the tar concentration can be detected by detecting the CH₄ concentration using the gas concentration sensor and analyzing it by an analyzer.

When the detected CH₄ concentration exceeds a reference concentration (reference value) Ca, it is possible to carry out the avoidance operation according to the flowchart shown in FIG. 5.

FIG. 6 (b) indicates a relationship between a N₂ concentration fluctuation and a CH₄ concentration fluctuation. The N₂ concentration fluctuation is correlated with the CH₄ concentration fluctuation. Thus, when the N₂ concentration fluctuation ΔN₂ exceeds a reference value ΔCb, it is possible to carry out the avoidance operation according to the flowchart indicated in FIG. 5.

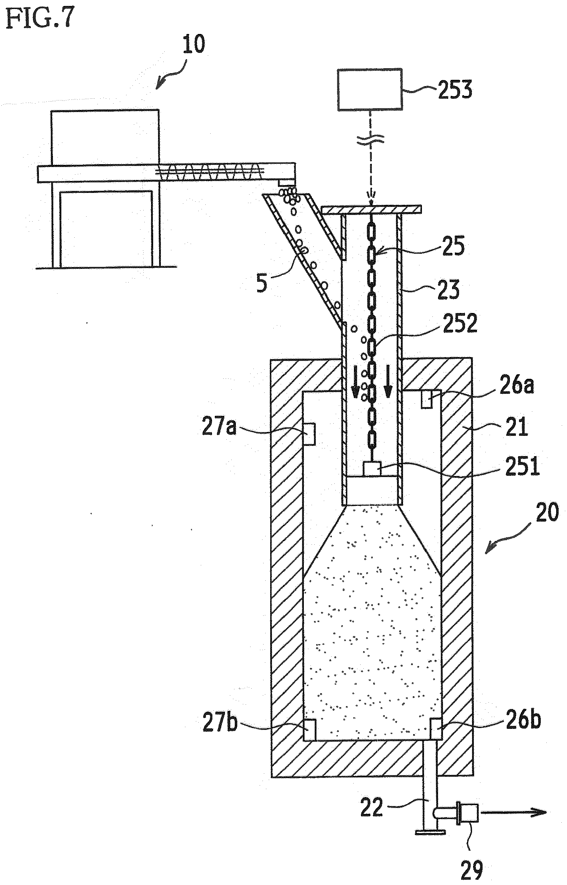

The present invention is not limited to the above embodiment. For example, in the above embodiment, the configuration having the constricted portion 210 on the inner surface of the gasification furnace main body 21 is exemplarily presented. However, the constricted portion 210 is not necessarily required. In FIG. 7, the gasification furnace 20 without the constricted portion 210 is shown.

There is a case in which the bridge is generated in the gasification furnace without the constricted portion 210. In such a case also, the inside furnace atmosphere under the bridge can be detected regardless the position of the bridge in the height direction due to the pressure sensor 26b and the temperature sensor 27b provided in the bottom portion of the gasification furnace 20, as shown in FIG. 7. In FIG. 7, the same elements as those in FIG. 2 have respectively the same reference numerals, thus the description of each element is omitted.

Also, the gasification furnace may be a single cylinder without the inner cylinder 23 and the constricted portion 210. In such a gasification furnace also, similarly to the gasification furnace 20 shown in FIG. 7, it is possible to monitor the inside furnace atmosphere when the bridge is broken due to the pressure sensor 26b and the temperature sensor 27b provided in the bottom portion of the gasification furnace. That is, the pressure sensor 26b detects increase of the inner pressure, or the temperature sensor 27b detects decrease of the inside furnace temperature. Thus, it is possible to avoid the tar.

Also, for the cross-section opening of the gasification furnace main body 21 and the inner cylinder 23, any shape can be adopted, such as a circular shape and a rectangular shape.

The foregoing embodiments are to be considered in all respects as illustrative and not limiting. The scope of the invention is indicated by the appended claims rather than by the foregoing description, and all modifications and changes that come within the meaning and range of equivalency of the claims are intended to be embraced therein.

### Industrial Applicability

The present invention is suitable for tar avoidance control in a gasification system. Especially, it is applicable to a purpose of monitoring a condition in which a large amount of tar is produced so as to prevent gas containing a large amount of tar from being supplied to an engine.

### Description of Reference Numerals

- 1: Gasification system
- 5: Fuel
- 10: Fuel supply apparatus
- 20: Gasification furnace
- 21: Gasification furnace main body
- 23: Inner cylinder
- 25: Level sensor (detection unit)
- 26a: Pressure sensor (detection unit)
- 26b: Pressure sensor (detection unit)
- 27a: Temperature sensor (detection unit)
- 27b: Temperature sensor (detection unit)
- 28: Control apparatus
- 29: Gas concentration sensor (detection unit)
- 101: Gas path
- 102: Gas path
- 103: Gas path
- 104: Gas path
- 105: Bypass gas path
- 106: Gas path
- 107: Gas path for engine
- 108: Surplus gas path
- 110: Opening/closing valve
- 111: Opening/closing valve
- 112: Opening/closing valve
- 210: Constricted portion
- 211: Narrowing opening
- 211a: Inclined surface
- 212: Throat portion
- 213: Expanding opening
- 235: Lower end opening
- H: Inside furnace level

## Claims

1. A gasification system (1) comprising:
a gasification furnace (20) configured to gasify fuel (5);
a fuel supply apparatus (10) configured to supply fuel (5) to the gasification furnace (20); and
an inner cylinder (23) configured to introduce the fuel (5) and air into the gasification furnace (20), the inner cylinder (23) being included in the gasification furnace (20),
the gasification system (1) being configured to supply gas generated in the gasification furnace (20) to an engine (100) via a gas path (101-108),
**characterized in that** the gasification system (1) further includes:
a detection unit (25,26a,26b,27a,27b) configured to detect whether or not a lower end portion of the inner cylinder (23) is plugged with the fuel (5); and
a control apparatus (28) connected with the detection unit (25,26a,26b,27a,27b) and provided to control opening/closing of opening/closing valves (110,111,112) in the gasification system (1) so as to stop the supply of the gas to the engine (100) when it determines that the lower end portion (235) of the inner cylinder (23) is not plugged with the fuel (5) based on a signal from the detection unit (25,26a,26b,27a,27b).

2. The gasification system (1) according to claim 1, wherein the gas is supplied to the engine (100) after elapse of a predetermined time period from when it is determined that the lower end portion of the inner cylinder (23) is re-plugged with the fuel (5).

3. The gasification system (1) according to claim 1 or 2, wherein a plurality of pressure sensors (26a,26b) and/or temperature sensors (27a,27b) is provided in the gasification furnace main body (21).

4. The gasification system (1) according to any of claims 1 to 3, wherein a gas concentration sensor (29) is provided in a gas discharge port (22).

## Patentansprüche

1. Ein Vergasungssystem (1), umfassend:
einen Vergasungsofen (20), der konfiguriert ist, um Brennstoff (5) zu vergasen;
ein Brennstoffzufuhrgerät (10), das konfiguriert ist, um dem Vergasungsofen (20) Brennstoff (5) zuzuführen; und
einen inneren Zylinder (23), der konfiguriert ist, um den Brennstoff (5) und Luft in den Vergasungsofen (20) einzuleiten, und der innere Zylinder (23) in dem Vergasungsofen (20) enthalten ist,
wobei das Vergasungssystem (1) konfiguriert ist, um das in dem Vergasungsofen erzeugte Gas einem Motor (100) über einen Gasweg (101-108) zuzuführen,
**dadurch gekennzeichnet, dass** das Vergasungssystem (1) ferner enthält:
eine Erfassungseinheit (25, 26a, 26b, 27a, 27b), die konfiguriert ist, um zu ermitteln, ob ein unterer Endabschnitt des inneren Zylinders (23) mit dem Brennstoff (5) verbunden ist oder nicht; und
ein Steuerungsgerät (28), das mit der Erfassungseinheit (25, 26a, 26b, 27a, 27b) verbunden ist, und vorgesehen ist, um das Öffnen / Schließen von Öffnungs- / Schließventilen (110, 111, 112) in dem Vergasungssystem (1) zu steuern, um die Zufuhr von dem Gas zu dem Motor (100) zu stoppen, wenn es auf der Grundlage eines Signals von der Erfassungseinheit (25, 26a, 26b, 27a, 27b) ermittelt, dass der untere Endabschnitt (235) des inneren Zylinders (23) nicht mit dem Brennstoff (5) verbunden ist.

2. Das Vergasungssystem (1) nach Anspruch 1, wobei das Gas dem Motor (100) nach dem Verstreichen einer vorbestimmten Zeitspanne ab dem Zeitpunkt an dem ermittelt ist, dass der untere Endabschnitt des inneren Zylinders (23) wieder mit dem Brennstoff (5) verbunden ist, zugeführt wird.

3. Das Vergasungssystem (1) nach Anspruch 1 oder 2, wobei eine Mehrzahl von Drucksensoren (26a, 26b) und / oder Temperatursensoren (27a, 27b) in dem Vergasungsofenhauptkörper (21) vorgesehen ist.

4. Das Vergasungssystem (1) nach einem der Ansprüche 1 bis 3, wobei ein Gaskonzentrationssensor (29) in einer Gasaustrittsöffnung (22) vorgesehen ist.

## Revendications

1. Un système de gazéification (1), comprenant:
un four de gazéification (20) qui est configuré pour gazéifier un combustible (5);
un dispositif de fourniture de combustible (10) qui est configuré pour fournir le combustible (5) au four de gazéification (20); et
un cylindre intérieur (23) qui est configuré pour introduire le combustible (5) et de l'air dans le four de gazéification (20), et le cylindre intérieur (23) est contenu dans le four de gazéification (20),
dans lequel le système de gazéification (1) est configuré pour fournir le gaz produit dans le four de gazéification (20) à un moteur (100) par un chemin de gaz (101-108),
**caractérisé en ce que** le système de gazéification (1) comprend en outre:
une unité de détection (25, 26a, 26b, 27a, 27b) qui est configurée pour déterminer si ou non une partie d'extrémité inférieure du cylindre intérieur (23) est connectée avec le combustible (5); et
un dispositif de commande (28) qui est connecté à l'unité de détection (25, 26a, 26b, 27a, 27b) et prévu pour commander l'ouverture / la fermeture des vannes d'ouverture / fermeture (110, 111, 112) dans le système de gazéification (1) pour arrêter la fourniture du gaz au moteur (100) quand il détermine sur la base d'un signal provenant de l'unité de détection (25, 26a, 26b, 27a, 27b) que la partie d'extrémité inférieure (235) du cylindre intérieur (23) n'est pas reliée avec le combustible (5).

2. Le système de gazéification (1) selon la revendication 1, dans lequel le gaz est fourni au moteur (100) après l'écoulement d'une période de temps prédéterminée à partir du moment que la partie d'extrémité inférieure du cylindre intérieur (23) est re-connecté avec le combustible (5).

3. Le système de gazéification (1) selon la revendication 1 ou 2, dans lequel une pluralité de capteurs de pression (26a, 26b) et / ou des capteurs de température (27a, 27b) est prévu dans le corps principal de four de gazéification (21).

4. Le système de gazéification (1) selon l'une quelconque des revendications 1 à 3, dans lequel un capteur de concentration de gaz (29) est prévu dans une ouverture de sortie de gaz (22).
